# EUROPÄISCHE PATENTANMELDUNG

(11) **EP 0 936 252 A1**
(43) Veröffentlichungstag der Anmeldung: **18.08.1999**
(21) Anmeldenummer: 99102183.3
(22) Anmeldetag: 04.02.1999
(51) Int. Cl.: C09D 5/29, C09D 7/12

(54) **Anstrichfarbe und Verfahren zum Auftragen dieser Anstrichfarbe auf einen Untergrund**

(30) Priorität: 10.02.1998 DE 19805255
(71) Anmelder: Stüwe, Inga Bagli, 40629 Düsseldorf (DE); Ullrich, Steffen, Dipl.-Ing., 40629 Düsseldorf (DE)
(72) Erfinder: Stüwe, Inga Bagli, 40629 Düsseldorf (DE); Ullrich, Steffen, Dipl.-Ing., 40629 Düsseldorf (DE)
(74) Vertreter: Türk, Gille, Hrabal

(57) **Zusammenfassung**

Es ist eine Anstrichfarbe, die in einem Trägermaterial gebunden Farbpigmente enthält, offenbart, wobei das Trägermaterial ein farbloses oder farbiges Bindemittel ist und die Farbpigmente in Form von Partikeln oder Granulaten im Bindemittel eingebettet sind. Mit dieser Anstrichfarbe lassen sich in einem Arbeitsgang Anstriche nach Fresko-Manier erzielen.

## Beschreibung

Die Erfindung betrifft eine Anstrichfarbe, welche in einem Trägermaterial gebunden Farbpigmente enthalt. Außerdem betrifft die Erfindung ein Verfahren zum Auftragen dieser Anstrichfarbe auf einen Untergrund.

Um sogenannte Fresko-Effekte zu erzielen, ist es bekannt, in mehreren Schichten von Hand Farben auf eine Unterlage aufzutragen, was jedoch arbeitsaufwendig und somit kostspielig ist.

Das Erzielen freskoähnlicher Effekte nach dem überlieferten Malerhandwerk liegt voll im Zeittrend von Glätte- und Marmoriertechniken, jedoch ist dies, wie gesagt, arbeitsaufwendig, weil der Farbauftrag in mehreren Schichten notwendig ist.

Der Erfindung liegt die Aufgabe zugrunde, freskoähnliche Effekte mittels einer Anstrichfarbe in einem Arbeitsgang erzielen zu können.

Diese Aufgabe wird erfindungsgemaß mit einer Anstrichfarbe gelöst, welche die Merkmale des Patentanspruches 1 aufweist. Vorteilhafte Ausgestaltungen dieser Anstrichfarbe und deren Anwendung sind Gegenstand der Unteransprüche.

Die erfindungsgemäße Anstrichfarhe enthält in einem Trägermaterial eingebettet Farbpigmente, beispielsweise in Form von Granulaten. Die Granulate bestehen aus Pulverfarbpigmenten. Die Farbpigmente können aber auch in Pulverform oder in anderer Form vorgesehen sein. Wichtig ist, daß die Farbpigmente separat und in verhältnismäßig geringer Dichte bzw. Verteilung im Trägermaterial angeordnet bzw. vorgesehen sind. Die Farbpigmente können dabei einfarbig oder mehrfarbig sein.

Ebenso kann das Trägermaterial farbneutral oder auch farbig sein.

Durch die Erfindung wird die Möglichkeit geschaffen, mehrere verschiedene Farben in einem Arbeitsschritt bzw. Arbeitsgang auf eine Unterlage aufzutragen, ohne daß dabei eine Mischfarbe entsteht. Vielmehr bleiben die einzelnen Farbanteile auch beim Auftragen erhalten, so daß Mehrfarbschicht-Effekte durch einen einzigen Anstrich bzw. in einem einzigen Arbeitsgang erzielt werden können.

Erfindungsgemäß. wird beispielsweise ein Gel, ein Bindemittel und/oder eine Dispersionsfarbe mit eingelagerten pulverförmigen oder granulatförmigen Farbpigmenten vorgeschlagen, mit dessen bzw. deren Hilfe beim Auftragen auf einen Untergrund durch einen einmaligen Auftrag ein Mehrfarbschicht-Effekt erzeugt wird.

Insbesondere gewährleistet die Erfindung die Möglichkeit, auch mehrere verschiedene Farben in einem Arbeitsschritt auf ein Substrat aufzutragen, ohhe daß dabei eine Mischfarbe entsteht.

Die erfindungsgemäße Anstrichfarbe bietet eine neue Technik bzw. Farbkomposition zur Gestaltung verschiedener Oberflächen von Wänden, Holzwerk, Fußböden, Möbeln, Textilien etc.

Die erfindungsgemäße Anstrichfarbe besteht beispielsweise aus einem farblosen oder farbigen Gel, beispielsweise einem Methylcellulose-Gel oder einem anderen Gel mit ähnlichen Eigenschaften, beispielsweise einem sonstigen Bindemittel oder auch einer Dispersionsfarbe mit darin eingebetteten Farbpigmenten unterschiedlichster Färbung und Partikelgröße. Die Parkelgröße kann von 1 nm bis mehrere Zentimeter betragen, sollte aber vorzugsweise zwischen 0,1 mm und 1,0 mm liegen. Da die Farbpigmente in das Gel, das sonstige Bindemittel bzw. die Dispersionsfarbe als Einzelkörper eingebettet sind, vermischen sie sich nicht miteinander, so däß keine Mischfarbe entsteht, selbst wenn Pulverfarbpigmente unterschiedlicher Farbtöne gleichzeitig eingesetzt sind.

Die Farbpartikel sowie Granulate unterschiedlichster Färbung bestehen aus Pulverfarbpigmenten, die durch Bindemittel oder andere Kräfte zusammengehalten werden. Bei leichtem Druck auf das Granulat löst sich der Verbund auf, so daß einzelne Pulverfarbpigmente vorliegen. Die Pulverfarbpigmente eines Granulates haben gleiche Färbung, können aber auch unterschiedliche Färbung aufweisen und, beispielsweise, in Gelkörpern gebunden sein.

Das Gemisch der erfindungsgemäßen Anstrichfarbe ist ein heterogenes Gemisch aus Farbpartikeln wie Farbpartikel-Granulat und Gel, Dispersionsfarbe oder einem anderen Bindemittel.

Beim Auftragen der erfindungsgemäßen Anstrichfarbe mit einem hierfür geeigneten Träger, z.B. einem Schwamm, auf eine Unterlage, beispielsweise eine Rauhfasertapete, werden die in dem Gel bzw. der Dispersionsfarbe oder einem anderen Bindemittel eingebetteten Farbpigment-Partikel wenigstens zum Teil zerrieben und verteilt, so däß sie einen flächigen Farbauftrag auf der Unterlage bilden. Die im Gel der Farbe eingebetteten Farbpigment-Parkel bzw. Granulate können bis zum Trocknen des Gels auch noch nach dem Auftragen bearbeitet werden. So ist es möglich, eine gewollte Farbschichtverteilung auf der Unterlage auch noch nach dem Auftragen der Anstrichfarbe zu bestimmen und den Anstrich auch noch nachträglich durch Verschieben und Verreiben der Farbpigment-Granulate mittels des zum Auftragen benutzten Trägers optisch zu verändern.

Erfindungsgemaß lassen sich einzelne oder mehrere verschiedene kontrastierende Farbtöne in nur einem Arbeitsgang auf Putz, Tapeten - insbesondere Rauhfasertapeten -, Papier, Holz, Textilien etc. mit einfachsten Geräten wie Schwamm, Pinsel, Bürste und verschiedenen Gewebematerialien auftragen. Das ist möglich, da erfindungsgemäß die Farbpigmente als Festkörper wie Granulat in einem Gel, einer Dispersionsfarbe oder einem sonstigen Bindemittel eingebettet sind. So geilngt es, mit der erfindungsgemäßen Anstrichfarbe den Farbauftrag in einem Arbeitsgang in gewünschter Weise zu gestalten.

Die gemäß der Erfindung in einem Anstrich oder Auftrag zu erzielenden Oberflächen- bzw. Farb-Effekte sehen künstlerisch und in der Gesamtheit einfach und lebendig aus. Sie haben einen freskoähnlichen Charakter. Die Farben und die Textur wirken real, ähnlich wie abgeriebene Glasur-Oberflächen, die durch nachträgliches aufwendiges Schleifen mit Sandpapier erzielt wurden.

Vergleichbare Effekte werden nach dem Stand der Technik nur durch Mehrschicht-Techniken, Spachtel-Techniken usw. erzielt. Die Unterlagen müssen für die Durchführung der Erfindung kaum vorbehandelt werden. Durch individuelle und beliebige Farbzusammenstellungen können sehr harmonische Übergänge zu Möbeln und anderen Farbkomponenten erzielt werden. Die mit der erfindungsgemäßen Anstrichfarbe versehene Oberfläche wirkt gebrochen und hat nicht den opaken Charakter einer Unifarbe.

Die erfindungsgemäße Anstrichfarbe hat zudem den Vorteil, däß sie keine toxisch reizenden oder geruchsbelästigenden Lösungsmittel enthält, welche beim Trocknungsprozeß verdampfen. Vielmehr ist eine einfachere Entsorgung als bei Farben auf Chlorkautschuk- und Polystyrol- sowie Kunstharzbasis möglich.

Beim Auftrag der Anstrichfarbe ist eine sehr einfache Reinigung möglich, da wenig Spritzer entstehen, so däß diese Anstrichfarbe schonend für Fußböden, Möbel usw. ist. Auch nach vollständiger Trocknung der Anstrichfarbe können Farbflecken noch leicht entfernt werden.

Andererseits ist ein schneller Farbauftrag möglich, so däß Nachbearbeitung, Ausbesserung oder Nachbesserung ohne Probleme durchgeführt werden können.

Gegenüber handelsüblichen Dispersionsfarben ist mit der erfindungsgemäßen Anstrichfarbe ein dünnerer Farbauftrag möglich, so daß der Farbauftrag atmungsaktiv bleibt. Eine mit der erfindungsgemäßen Anstrichfarbe versehene Tapete kann bei Renovierungsarbeiten leichter abgelöst und entfernt werden- Übliche Dispersionsfarben sind wasserundurchlässig und erschweren demgegenüber das Anlösen des die Tapete auf der Wand oder einem sonstigen Untergrund haltenden Tapetenleims bzw. -kleisters.

Gemäß der Erfindung müssen die in der Anstrichfarbe enthaltenen Farbpigmente nicht feinst gemahlen sein, was bei Einsatz handelsüblicher Dispersionsfarben für eine einfache Herstellung als unabdingbare Forderung gilt. Außerdem ist es erfindungsgemäß auch möglich, wasserabweisende Untergründe durch Zusatz bzw. in Verbindung mit handelsüblicher Dispersionsfarbe zu bearbeiten.

Zum Auftragen und Bearbeiten der erfindungsgemäßen Anstrichfarbe können ganz einfache Werkzeuge wie Schwämme, Pinsel usw. verwendet werden, die sich auch einfach reinigen lassen.

Die mit der erfindungsgemäßen Anstrichfarbe zu versehenen Untergründe können von beliebiger Struktur sein, beispielsweise strukturierte oder mit einer speziellen Prägung versehene Tapeten. Auch auf gemusterten Tapeten können durch einmaliges Überstreichen mit der erfindungsgemäßen Anstrichfarbe besonders edle Effekte erzielt werden, da die gemusterte Tapete Tiefenwirkung hat und nur zart durchscheint.

Farbliche Effekte durch verschiedene Auftragtechniken lassen sich ebenfalls erzielen. Der Deckungsgrad der Anstrichfarbe auf dem Untergrund kann vorweg bestimmt oder auch noch nachträglich geändert werden.

Ein wesentlicher Vorteil der Erfindung besteht nicht nur in der Möglichkeit, eine beliebige Pigmentdichte in der Anstrichfarbe zu erzielen, sondern diese Dichte auch wieder verringern zu können. Dadurch kann eine zu intensiv geratene Farbfläche sehr einfach mit reinem Grundgel, das keine Farbpartikel enthält, nachgebessert werden.

Die erfindungsgemäße Anstrichfarbe, welche aus einer Kombination eines als Trägermaterial dienenden farblosen oder weißen Gels oder Bindemittels oder einer Dispersionsfarbe mit Granulaten wie Farbpigment-Partikeln unterschiedlichster Färbungen besteht, kann in Verbindung mit dem beschriebenen Verfahren des Farbauftrages in einem Arbeitsgang das Erzielen von Mehrschichtfarbeffekten erheblich erleichtern. Dadurch ist es möglich, mit einfachen Mitteln dem Trend in der Innenraumgestaltung nach Mehrfarbeffekten gerecht zu werden bzw. diesen sogar zu unterstützen.

Die erfindungsgemäße Anstrichfarbe kann fertig, d. h. einsatzbereit, von einem Hersteller geliefert werden. Es ist aber auch möglich, die Farbpigmente in Granulat-Form an den Verbraucher zu liefern, der das Granulat selbst mit dem Bindemittel, beispielsweise einem Gel oder einer Dispersionsfarbe, mischt.

Es ist auch möglich, die Farbpigmente in Form von Gelkörpern, welche die Farbpigmente in einer aus Bindemittel wie Gel bestehenden Hülle enthalten, vorzusehen- Hierdurch können Dichteunterschiede zwischen Granulat und Bindemittel ausgeglichen werden, um Sedimentationsprozessen vorzubeugen und spezielle Mehrschichtfarbeffekte zu erreichen. Das Granulat wird in einen stabilen Gelkörper eingebettet. Der Gelkörper weist eine geringere Dichte auf als das Granulat. Eine Sedimentation des Gelkörpers mit Granulat kann dadurch verhindert werden, däß man die Dichte des Gelkörpers mit Granulat der Dichte des Trägermaterials angleicht.

Zur weiteren Erläuterung der Erfindung wird diese anhand von zwei Ausführungsbeispielen einer erfindungsgemäßen Anstrichfarbe (HPGF) erläutert.

### Beispiel 1:

### HPGF (Farbpartikel: SIENNA NATUR; SIENNA GEBRANNT; GOLDOCKER; OCKER DUNKEL; KRAPP ROSA)

### 1. Schritt:

In einem Gefäß wird 1 Teil Methylcellulose mit 80 Teilen Wasser zu einer Menge von einem Liter verrührt und 30 Minuten quellen gelassen.

### 2. Schritt:

Folgende Farbpartikel werden unregelmäßig in das so hergestellte Bindegewebe untergerührt:

| Menge | Farbpartikel/-pigment | Partikeldurchmesser |
|---|---|---|
| 15 g | SIENNA NATUR | 0,01 mm bis 10 mm |
| 15 g | SIENNA GEBRANNT | 0,01 mm bis 10 mm |
| 15 g | GOLDOCKER | 0,01 mm bis 10 mm |
| 15 g | OCKER DUNKEL | 0,01 mm bis 10 mm |
| 15 g | KRAPP ROSA | 0,01 mm bis 10 mm |

### 3. Schritt:

Mit einem HPGF-Träger (Schwamm) wird die HPGF aufgenommen und mit kreisenden Bewegungen und leichtem Druck auf die Oberfläche (Rauhfasertapete) aufgebracht.

### Beispiel 2:

### 1. Schritt:

In einem Gefäß wird 1 Teil Methylcellulose mit 80 Teilen Wasser zu einer Menge von einem Liter verrührt und 30 Minuten quellen gelassen.

### 2. Schritt:

Es wird ein Gemisch von der Firma Bayer AG unter der Bezeichnung "Bayferrox" gelieferten Pigment-Granulaten unregelmäßig in das gemäß Schritt 1 hergestellte Bindemittel untergerührt:

| Menge | Granulat/Pigment | Partikeldurchmesser |
|---|---|---|
| 5 g | Bayferrox 615C, Bayer AG | 0,1 mm bis 1 mm hellbraun |
| 5 g | Bayferrox 965C, Bayer AG | 0,1 mm bis 1 mm orange |
| 5 g | Bayferrox 920C, Bayer AG | 0,1 mm bis 1 mm gelb |

### 3. Schritt:

Mit einem Schwamm wird das so erzeugte Farbgemisch aufgenommen und mit kreisenden Bewegungen und leichtem Druck auf eine Oberfläche, beispielsweise eine Rauhfasertapete, aufgetragen.

Die erfindungsgemäße Anstrichfarbe und deren Herstellung sowie Verarbeitung wird nachstehend anhänd der beigefügten Zeichnungen weiter erläutert, und zwar zeigt
- **Fig. 1**: einen senkrechten Schnitt durch ein Gefäß, in welchem die Anstrichfarbe hergestellt und gelagert wird,
- **Fig. 2**: einen senkrechten Schnitt durch ein Handwerkzeug, mit dem die erfindungsgemäße Anstrichfarbe auf eine Unterlage aufgetragen wird, und
- **Fig. 3**: einen senkrechten Schnitt durch ein Gefäß, in welchem eine gegenüber Fig. 1 abgewandelte Anstrichfarbe enthalten ist.

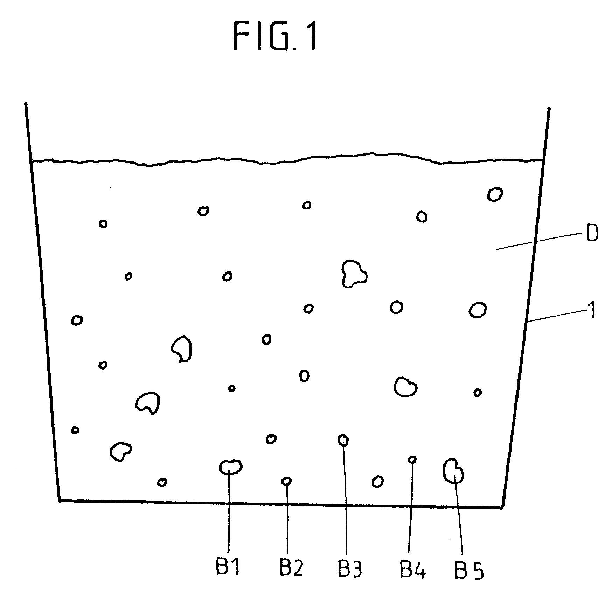

Gemäß Fig. 1 wird in einem topfartigen Gefäß 1 ein farbloses Gel D angesetzt und quellen gelassen. Sodann werden verschiedene Farbpigmente B1 bis B5 eingegeben und unregelmäßig untergerührt. Wie Fig. 1 zeigt, sind die Farbpigmente B1 bis B5 in unregelmäßiger Verteilung im Gel D angeordnet und eingebettet.

Gemäß dem zuvor beschriebenen Beispiel sind die Farbpigmente B1 Pigmente "Sienna Natur", die Farbpigmente B2 "Sienna Gebrannt", die Farbpigmente B3 "Goldocker", die Farbpigmente B4 "Ocker dunkel" und die Farbpigmente B5 "Krapp Rosa".

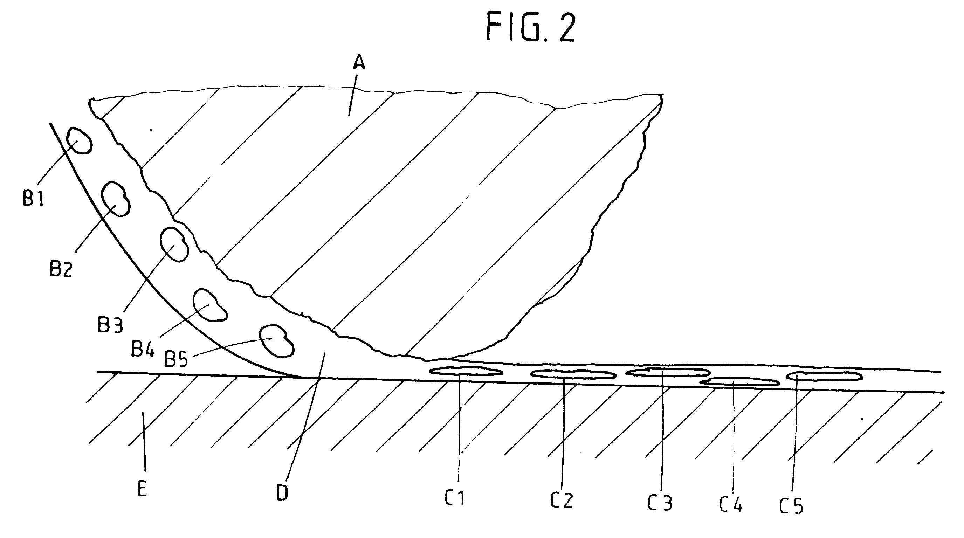

Aus Fig. 2 ist erkennbar, daß das Gel D mit den darin befindlichen Farbpigmenten B1 bis B5 mittels eines Schwammes A oder eines sonstigen Auftragwerkzeuges wie eines Pinsels, einer Bürste usw. auf eine Unterlage E aufgetragen wird. Da der Schwamm A das Gel D leicht auf die Unterlage E drückt, werden die Farbpigmente B1 bis B5 verrieben und in Plättchenform überführt, was durch die Positionsziffern C1 bis C5 angedeutet ist. Durch die kreisende und leicht drückende Bewegung des Schwammes A entstehen auf der Oberfläche der Unterlage E die gewünschten Farbeffekte.

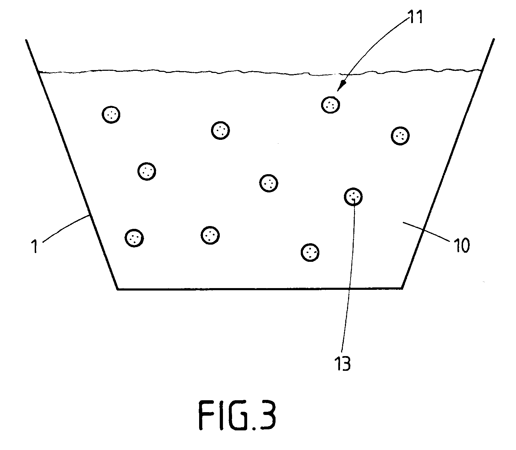

Aus Fig. 3 ist erkennbar, daß in der Anstrichfarbe in einem Bindemittel 10, das eine Dispersionsfarbe sein oder auch Silikonöl sein oder enthalten kann, Gelkörper 11 in geringer Konzentration verteilt angeordnet sind. In den stabilen Gelkörpern sind Granulate 13 eingelagert. Die Granulate bestehen wiederum aus Pulverfarbpigmenten.

## Patentansprüche

1. Anstrichfarbe, die in einem Trägermaterial gebunden Farbpigmente enthält, dadurch gekennzeichnet, däß das Trägermaterial ein farbloses oder einfarbiges Gel, eine Dispersionsfarbe oder ein sonstiges Bindemittel ist, und daß die Farbpigmente in Form von pulverförmigen Partikeln im Bindemittel eingebettet sind.

2. Anstrichfarbe nach Anspruch 1, dadurch gekennzeichnet, daß das Bindemittel ein Methylcellulose-Gel ist.

3. Anstrichfarbe nach Anspruch 1, dadurch gekennzeichnet, däß das Bindemittel ein Silikonöl ist oder enthält.

4. Anstrichfarbe nach einem der Ansprüche 1 bis 3, dadurch gekennzeiclmet, däß die Farbpigmente eine Partikelgröße von 1 µm bis mehrere mm Durchmesser aufweisen.

5. Anstrichfarbe nach einem der Ansprüche 1 bis 4, dadurch gekennzeichnet, das die pulverförmigen Farbpigmente in Form von Granulat-Körpern vorgesehen sind, die eine Größe von jeweils 1 µm bis mehrere Millimeter haben.

6. Anstrichfarbe nach einem der Ansprüche 1 bis 5, dadurch gekennzeichnet, das das Trägermaterial zwei oder mehr Farbpigmente unterschiedlicher Farbtöne enthält.

7. Anstrichfarbe nach einem der Ansprüche 1 bis 6, dadurch gekennzeichnet, das das Trägermaterial Gelkörper mit eingebettetem Farbpigment-Granulat enthält.

8. Anstrichfarbe nach Anspruch 7, dadurch gekennzeichnet, daß die Gelkörper einen Dichteunterschied zwischen Granulat und Trägermaterial ausgleichen, um Sedimentationsprozesse des Granulates im viskosen Trägermaterial zu verhindern und spezielle Mehrschichtfarbeffekte zu erreichen.

9. Verfahren zum Auftragen einer Anstrichfarbe mit den Merkmalen nach einem der Ansprüche 1 bis 8 auf einen Untergrund, dadurch gekennzeichnet, das beim Auftragen der Anstrichfarbe auf den Untergrund die Farbpigment-Granulate wenigstens zum Teil zerrieben werden und in ihre pulverförmigen Farbpigmente (Teilchengröße etwa 1 µm) zerfallen.

10. Anwendung einer Anstrichfarbe nach einem der Ansprüche 1 bis 6 zum Anstreichen von Untergründen nach Fresko-Manier in einem Arbeitsgang.
